# FASCICULE DE BREVET EUROPEEN

(11) **EP 3 070 343 B1**
(45) Date de publication et mention de la délivrance du brevet: **12.05.2021**
(21) Numéro de dépôt: 16160256.0
(22) Date de dépôt: 15.03.2016
(51) Int. Cl.: F16B 5/02, F16B 41/00, F16B 21/07

(54) **DISPOSITIF DESTINE A ETRE FIXE COMPRENANT UNE PARTIE AVEC UN ORIFICE ET UN RUBAN METALLIQUE FIXE AUDIT ORIFICE**
VORRICHTUNG ZUM BEFESTIGEN, DIE EINEN TEIL MIT EINER ÖFFNUNG UND EINEM AN DIESE ÖFFNUNG BEFESTIGTEN METALLBAND UMFASST
DEVICE INTENDED FOR BEING STATIONARY INCLUDING A PORTION WITH AN OPENING AND A METAL BAND ATTACHED TO SAID OPENING

(30) Priorité: 16.03.2015 FR 1552135
(43) Date de publication de la demande: 21.09.2016
(73) Titulaire: Hellermanntyton, 78190 Trappes (FR)
(72) Inventeur: NAMPON, Damien, 94480 ABLON SUR SEINE (FR); CHERDO, Pascal, 78650 BEYNES (FR)
(74) Mandataire: INNOV-GROUP

(56) Documents cités:
- WO-A1-2013/187333
- DE-A1-102009 011 547
- DE-U1-202013 000 387
- US-A1- 2008 304 906

## Description

La présente invention concerne un dispositif destiné à être fixé comprenant une partie avec un orifice et un ruban métallique fixé audit orifice ainsi qu'un procédé de fixation dudit dispositif à un support.

Dans de nombreux domaines de l'industrie tels que l'automobile ou l'aéronautique, il est indispensable que des pièces constituant divers éléments soient assemblées de manière durable.

Parmi les moyens de fixation, on peut citer par exemple un système de type vis-écrou de serrage venant s'insérer par exemple dans des dispositifs destinés à être fixés comme par exemple une embase ou une goulotte de fixation. Ces dispositifs comprennent un orifice servant à fixer à titre d'exemple des câblages électriques, des tuyaux ou des durits, des organes ou des boitiers en plastique dans les véhicules automobiles ou dans le domaine aéronautique.

Lors de leur utilisation, les embases sur lesquelles le système vis-écrou vient prendre appui sont sollicitées à des fortes contraintes mécaniques au niveau de l'orifice de l'embase créant ainsi une déformation de ladite embase.

Ce phénomène est d'autant plus marqué lorsque l'embase est une pièce injectée en plastique.

C'est pourquoi, il existe actuellement des dispositifs comprenant une partie avec un orifice et un ruban métallique (appelés également insert) qui se place sur le pourtour de l'orifice de la partie afin que le système vis-écrou prenne appui sur la surface métallique du ruban et non plus sur la surface plastique de la partie du dispositif.

Cependant, ces rubans métalliques sont simplement insérés dans l'orifice de la partie du dispositif, ce qui présente de nombreux inconvénients.

En effet, il est assez fréquent que le ruban métallique se détache de l'orifice lors du transport du dispositif ou lors de son l'installation avant que ce dernier n'ait pu être fixé sur un support.

De plus, le ruban métallique doit avoir des dimensions très précises de façon à être en contact avec le pourtour de l'orifice. Si ses dimensions sont trop importantes, son insertion sera difficile, si ses dimensions sont trop faibles, la fixation ne sera pas assurée.

C'est pourquoi, il serait intéressant de disposer d'un dispositif destiné à être fixé comprenant une partie avec un orifice pouvant se fabriquer facilement et qui pourrait être fixé simplement et de manière durable à un support sans déformer ladite partie du dispositif.

Un exemple de dispositif destiné à être fixé conformément aux enseignements de l'art antérieur est décrit notamment dans le document DE202013000387U1.

Or, les inventeurs ont démontré qu'un dispositif comprenant une partie avec un orifice présentant une structure particulière et un ruban métallique permettait de répondre à ces exigences.

Ainsi, un premier objet de l'invention est un dispositif destiné à être fixé tel que défini dans les revendications ci-jointes.

Selon l'invention, le référentiel orthonormé (XYZ) est utilisé dans lequel la hauteur h1 de la paroi interne et la hauteur h2 du ruban sont définis par rapport à l'axe Z. Le plan (XY) étant orthogonal à l'axe Z.

Selon un mode de réalisation, la partie et le ruban sont fixés ou sont directement intégrés au dispositif destiné à être fixé à un support.

Selon un mode de réalisation, le dispositif destiné à être fixé sur un support est choisi dans le groupe consistant en une goulotte de fixation ou de cheminement, une embase, un boitier en plastique.

Selon l'invention, l'orifice peut présenter différentes formes telles qu'une forme circulaire, une forme oblongue, une forme elliptique ou bien une forme rectangulaire.

Selon un mode de réalisation, l'épaisseur e du ruban métallique est comprise entre 0.5mm et 3mm, de préférence entre 0.7mm et 1.5mm.

Selon un mode de réalisation particulier, l'orifice a une forme oblongue définissant deux surfaces planes opposées, c'est-à-dire disposées en regards l'une de l'autre, et deux surfaces courbes opposées, se présentant généralement sous la forme de demi-cercle.

L'homme du métier saura adapter les dimensions de l'orifice en fonction des dimensions de l'élément de fixation destiné à être inséré dans ledit orifice.

En effet, plus le nombre de protubérances est important et plus le ruban métallique est fixé de manière solidaire à l'orifice de la partie du dispositif.

Selon l'invention, deux protubérances sont situées à différentes positions z₁ et z₂ (avec z₁ différent de z₂) selon l'axe Z. Selon un mode de réalisation particulier, les deux protubérances sont situées à différentes positions y₁ et y₂ (avec y₁ différent de y₂) selon l'axe Y et/ou à différentes positions x₁ et x₂ (avec x₁ différent de x₂) selon l'axe X afin de fixer de manière optimale le ruban à l'orifice de la partie du dispositif.

Selon un mode de réalisation particulier, l'orifice de la partie du dispositif est de forme oblongue et la paroi interne de l'orifice comprend deux protubérances disposées sur les deux surfaces planes opposées de la paroi interne de l'orifice, et de manière avantageuse l'une en face de l'autre.

Selon un autre mode de réalisation particulier pouvant être combiné au précédent, la paroi interne de l'orifice comprend deux protubérances disposées à différentes positions z₁ et z₂, les positions z₁ et z₂ étant avantageusement les plus éloignées possibles.

Selon l'invention, au moins une protubérance est mobile dans la direction Z et/ou dans le plan (XY) afin de permettre l'introduction du ruban métallique dans l'orifice. Ce mode de réalisation est particulièrement adapté lorsque le ruban métallique est très peu déformable.

Selon l'invention, la protubérance mobile est mise en déplacement en appliquant une force extérieure sur ladite protubérance ou sur un actuateur relié à ladite protubérance dans la direction Z et/ou dans le plan (XY).

Comme actuateur, on peut citer par exemple une tige située sur la partie du dispositif et qui serait reliée à la protubérance de la paroi interne de l'orifice de la partie.

Selon un mode de réalisation, une fois que la protubérance mobile n'est plus soumise à aucune force extérieure, elle retourne automatiquement à sa position d'équilibre.

Ce retour automatique à la position d'équilibre peut se faire par exemple soit naturellement lorsque le matériau constituant la partie du dispositif est suffisamment élastique soit avec un ressort lorsque le matériau de la partie du dispositif est rigide.

Selon un mode de réalisation particulier combiné au précédent, la paroi interne de l'orifice comprend :
- une protubérance mobile dans le plan (XY) et/ou dans la direction Z afin de permettre l'insertion du ruban dans l'orifice de la partie du dispositif ; et
- une protubérance fixe permettant de retenir le ruban dans l'orifice de la partie du dispositif.

La partie du dispositif selon l'invention peut être réalisée en différents matériaux en fonction de son domaine d'utilisation.

Ainsi, selon un mode de réalisation, la partie du dispositif est réalisée dans un matériau choisi dans le groupe consistant en un plastique, un composite et leurs mélanges.

Selon un mode de réalisation particulier, la partie du dispositif est réalisée par injection plastique.

Selon l'invention, la paroi interne de l'orifice comprend deux protubérances situées à une position différente selon l'axe Z et sur deux surfaces opposées de la paroi interne, le ruban métallique comprend un premier ensemble de deux encoches (destiné à venir coopérer avec les protubérances de la paroi interne) et un second ensemble de deux encoches symétrique par rapport au premier ensemble dans un plan XY orthogonal à l'axe Z.

Ainsi, selon l'invention, le ruban comprend 4 encoches permettant ainsi un assemblage très aisé du ruban dans l'orifice, et ce dans l'importe quel sens.

Selon l'invention, le ruban métallique peut présenter une hauteur h₂ inférieure, égale ou supérieure à la hauteur h₁ de de la paroi interne en fonction notamment de l'emplacement des protubérances de la paroi interne de l'orifice.

Selon un mode de réalisation, h1 est compris entre 3mm et 10mm, de préférence entre 3.5 et 4.5mm.

Selon un mode de réalisation, h2 est compris entre 3.1mm et 11mm, de préférence entre 3.6 et 5mm.

Selon un mode de réalisation particulier, le ruban métallique dépasse de la partie du dispositif dans la direction Z afin de s'assurer que l'élément de fixation (système vis-écrou) soit en contact uniquement avec le ruban métallique et non avec la partie du dispositif, la partie du ruban qui dépasse selon l'axe Z étant la partie opposée à la partie destinée à être en contact avec le support.

Selon l'invention, le ruban métallique est réalisé dans un matériau capable de supporter des couples de serrage importants sans se déformer.

Selon un mode de réalisation, le ruban métallique peut supporter un couple de serrage supérieur à 15N.m, de préférence supérieur à 20N.m, de manière encore plus préférée supérieur à 25N.m.

Ainsi, selon un mode de réalisation, le ruban métallique est réalisé en acier. On peut citer par exemple, l'acier EN 10 32-4-C75S pour un ruban métallique ayant une épaisseur de 1mm.

Selon un autre mode de réalisation, le matériau du ruban métallique est obtenu par moulage et/ou a subi des traitements thermiques afin d'accroitre ses propriétés de résistance mécanique.

Un autre objet de l'invention est un kit comprenant le dispositif destiné à être fixé tel que défini précédemment et un élément de fixation.

Selon un mode de réalisation, l'élément de fixation est choisi dans le groupe consistant en une vis, un système vis-écrou, un système vis-écrou-rondelle, et une rondelle intégrée ou non à un écrou.

Selon ce mode de réalisation, les dimensions de l'élément de fixation sont sensiblement identiques à celles de l'orifice de la partie du dispositif.

Un autre objet de l'invention est un procédé de fixation d'un dispositif sur un support tel que défini dans les revendications ci-jointes.

Selon un mode de réalisation particulier, l'étape consistant à fixer le ruban dans l'orifice en faisant coopérer l'évidement du ruban avec la protubérance de la paroi interne est réalisée de façon à ce que le ruban métallique dépasse de la partie du dispositif dans la direction Z afin de s'assurer que l'élément de fixation (système vis-écrou) soit en contact uniquement avec le ruban métallique et non avec la partie du dispositif, la partie du ruban qui dépasse selon l'axe Z étant la partie opposée à la partie destinée à être en contact avec le support.

Par ailleurs, toutes les caractéristiques techniques décrites dans les modes de réalisation du dispositif destiné à être fixé décrit précédemment s'appliquent également au procédé de l'invention.

Enfin, un autre objet de l'invention est l'utilisation du dispositif tel que défini précédemment ou du kit tel que défini précédemment afin de fixer un dispositif à un support.

### Description des figures

La figure 1 représente un dispositif destiné à être fixé selon l'invention comprenant une partie comportant un orifice et un ruban métallique.
La figure 2 représente le dispositif de la figure 1 dans lequel le ruban métallique est inséré dans l'orifice de la partie du dispositif.
La figure 3 représente une vue de dessous du dispositif de la figure 2.
La figure 4 représente une vue en coupe du dispositif de la figure 2.
La figure 5 représente le dispositif de la figure 2 dans lequel un élément de fixation (système vis-écrou) a été inséré dans l'orifice de la partie du dispositif.

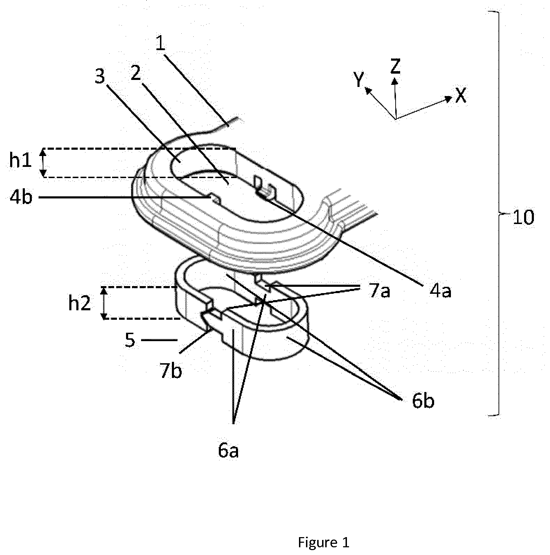

La figure 1 représente un dispositif destiné à être fixé 10 comprenant une partie 1 présentant un orifice 2 traversant formant une paroi interne 3 d'une hauteur h₁ dans la partie 1. La paroi interne 3 comprend une protubérance 4a mobile selon l'axe X et une protubérance fixe 4b.

Le dispositif 10 comprend également un ruban métallique 5 ayant une hauteur h₂ selon l'axe Z et une épaisseur. Le ruban métallique est de forme oblongue définissant deux surfaces planes 6a et deux demi-cercles 6b. Le ruban métallique 5 comprend deux paires d'encoches 7a et 7b disposées en regard l'une de l'autre sur les surfaces planes 6a, lesdites paires d'encoches 7a et 7b étant symétriques par rapport au plan (XY) orthogonal à l'axe Z. La présence de ces 4 encoches ayant une configuration particulière sur le ruban permet ainsi un assemblage très aisé du ruban dans l'orifice, et ce dans l'importe quel sens.

Les protubérances 4a et 4b sont situées l'une en face de l'autre sur les deux surfaces planes et à deux positions différentes selon l'axe Z correspondant, avantageusement les plus éloignées possible.

La protubérance 4a mobile permet l'insertion du ruban métallique dans l'orifice de la partie du dispositif 1.

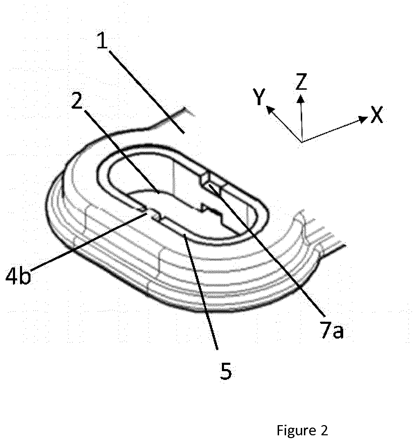

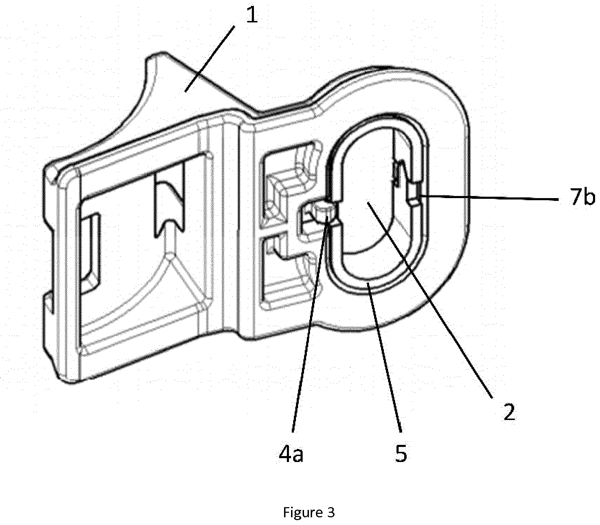

Comme illustré avec les figures 2 et 3, une fois que le ruban métallique 5 est inséré dans l'orifice 2 de la partie du dispositif 1, ce dernier est accolé et fixé de manière durable à la partie du dispositif 1. En effet, la protubérance fixe 4b permet d'assurer le maintien du ruban 5 en jouant un rôle de butée contre une des encoches 7a. De plus, une fois que le ruban est inséré dans l'orifice et qu'une des encoches 7a coopère avec la protubérance fixe 4b, la protubérance mobile 4a retrouve sa position d'équilibre grâce à l'élasticité du matériau de la partie du dispositif 1.

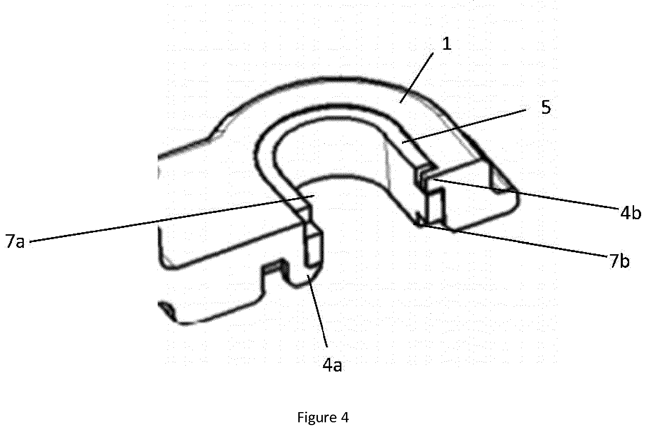

Ainsi, comme représenté sur la figure 4, quand le ruban 5 est inséré dans l'orifice 2, ce dernier est fixé de manière solidaire à l'orifice de la partie du dispositif 1 puisque le ruban 5 est bloqué à la fois par la protubérance fixe 4b qui coopère avec l'encoche et par la protubérance mobile 4a revenu à sa position d'équilibre qui coopère avec l'encoche.

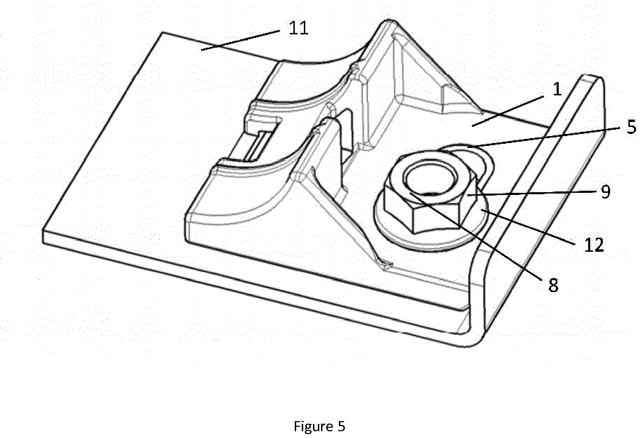

La figure 5 représente le dispositif de la figure 2 dans lequel un élément de fixation (ici un système vis 8-écrou 9- rondelle 12) est inséré dans l'orifice 2 de la partie du dispositif 1 afin de fixer ladite la partie du dispositif 1 à un support 11.

La présence du ruban métallique permet d'appliquer des couples de serrage important sur l'élément de fixation sans que l'orifice de la partie du dispositif soit déformé puisque l'élément de fixation est en contact uniquement avec le ruban métallique et non avec la partie du dispositif.

De plus, la présence d'au moins une protubérance sur la paroi interne de l'orifice de la partie du dispositif et d'au moins un évidement sur le ruban métallique permet de fixer de manière solidaire le ruban à l'orifice de la partie du dispositif durant son transport et durant son installation.

## Revendications

1. Dispositif destiné à être fixé (10) incluant :
- une partie (1) comprenant un orifice (2) traversant formant une paroi interne (3) dans ladite partie, ladite paroi interne (3) ayant une hauteur h1 selon un axe (Z); et
- un ruban métallique (5), ayant une hauteur h2 selon l'axe (Z) et une épaisseur e, ledit ruban métallique (5) étant accolé et fixé à la paroi interne (3) de l'orifice (2);
**caractérisé en ce que** :
• l'orifice (2) définit deux surfaces opposées dans la paroi interne (3),
• la paroi interne (3) de l'orifice (2) comprend deux protubérances (4a, 4b) disposées sur les deux surfaces opposées et disposées à différentes positions z₁, z₂, avec z₁ différent de z₂, selon l'axe (Z),
• le ruban métallique (5) comprend: un premier ensemble de deux encoches (7a, 7b) coopérant avec les protubérances (4a, 4b) de ladite paroi interne (3); et un second ensemble de deux encoches symétrique par rapport au premier ensemble dans un plan (XY) orthogonal à l'axe (Z), le ruban métallique (5) comprenant ainsi quatre encoches (7a, 7B),
• au moins une protubérance (4a) est mobile dans la direction de l'axe (Z) et/ou dans un plan (XY) orthogonal à l'axe (Z) afin de permettre l'introduction du ruban métallique (5) dans l'orifice (2²).

2. Dispositif destiné à être fixé (10) selon la revendication précédente **caractérisé en ce que** le ruban métallique (5) dépasse de la partie du dispositif (1) dans la direction Z.

3. Dispositif destiné à être fixé (10) selon l'une des revendications précédentes, **caractérisé en ce que** l'orifice de la partie du dispositif (1) est de forme oblongue définissant deux surfaces planes opposées et deux surfaces courbes opposées dans la paroi interne (3).

4. Dispositif destiné à être fixé (10) selon l'une des revendications précédentes **caractérisé en ce que** h2>h1.

5. Dispositif destiné à être fixé (10) selon l'une des revendications précédentes **caractérisé en ce que** la partie du dispositif (1) est réalisée dans un matériau choisi dans le groupe consistant en un plastique, un composite et leurs mélanges.

6. Dispositif destiné à être fixé (10) selon l'une des revendications précédentes **caractérisé en ce que** le ruban métallique (5) est réalisé en acier.

7. Kit comprenant le dispositif destiné à être fixé tel que défini dans l'une des revendications précédentes et un élément de fixation.

8. Procédé de fixation d'un dispositif sur un support (11) comprenant les étapes consistant à :
fournir un dispositif destiné à être fixé (10) comportant une partie (1) comprenant un orifice (2) formant une paroi interne (3) d'une hauteur h1 selon un axe (Z) dans ladite partie; la paroi interne (3) de l'orifice (2) définissant deux surfaces opposées et comprenant deux protubérances (4a, 4b) disposées sur les deux surfaces opposées et disposées à différentes positions z₁, z₂, avec z₁ différent de z₂, selon l'axe (Z), au moins une protubérance (4a, 4b) étant mobile dans la direction de l'axe (Z) et/ou dans un plan (XY) orthogonal à l'axe (Z);
fournir un ruban métallique (5) d'une hauteur h2 selon l'axe (Z) et d'une épaisseur e comprenant: un premier ensemble de deux encoches (7a, 7b) destiné à venir coopérer avec les protubérances (4a, 4b) de la paroi interne (3) de l'orifice (2); et un second ensemble de deux encoches symétrique par rapport au premier ensemble dans un plan (XY) orthogonal à l'axe (Z), le ruban métallique (5) comprenant ainsi quatre encoches (7a, 7B);
fixer le ruban (5) dans l'orifice (2) de la partie du dispositif (1) en faisant coopérer les encoches (7a, 7b) du ruban (5) avec les protubérances (4a, 4b) de la paroi interne (3) de l'orifice (2), la protubérance mobile (4a) étant mise en déplacement en appliquant une force extérieure sur ladite protubérance (4a) ou sur un actuateur relié à ladite protubérance (4a) dans la direction de l'axe (Z) et/ou dans le plan (XY) orthogonal à l'axe (Z);
disposer le dispositif obtenu à l'étape précédente sur un support ;
insérer un élément de fixation (8, 9, 12) dans l'orifice (2) de la partie du dispositif (1); et
fixer ledit dispositif au support (11).

9. Utilisation du dispositif tel que défini dans l'une des revendications 1 à 6 ou du kit tel que défini dans la revendication 7 afin de fixer ledit dispositif à un support.

## Patentansprüche

1. Vorrichtung zur Befestigung (10), die beinhaltet:
- einen Teil (1), der eine durchgehende Öffnung (2) umfasst, die eine Innenwand (3) in dem Teil bildet, wobei die Innenwand (3) eine Höhe h1 entlang einer Achse (Z) aufweist, und
- ein Metallband (5), das eine Höhe h2 entlang der Achse (Z) und eine Dicke e aufweist, wobei das Metallband (5) an der Innenwand (3) der Öffnung (2) anliegt und befestigt ist,
**dadurch gekennzeichnet, dass**:
• die Öffnung (2) zwei entgegengesetzte Flächen in der Innenwand (3) definiert,
• die Innenwand (3) der Öffnung (2) zwei Vorsprünge (4a, 4b) umfasst, die an den beiden entgegengesetzten Flächen angeordnet sind und an unterschiedlichen Positionen z₁, z₂, mit z₁ ungleich z₂, entlang der Achse (Z) angeordnet sind,
• das Metallband (5) umfasst: einen ersten Satz aus zwei Aussparungen (7a, 7b), die mit den Vorsprüngen (4a, 4b) der Innenwand (3) zusammenwirken, und einen zweiten Satz aus zwei Aussparungen, der zum ersten Satz in einer zur Achse (Z) senkrecht verlaufenden Ebene (XY) symmetrisch ist, wobei das Metallband (5) somit vier Aussparungen (7a, 7B) umfasst,
• mindestens ein Vorsprung (4a) in Richtung der Achse (Z) und/oder in einer zur Achse (Z) senkrecht verlaufenden Ebene (XY) beweglich ist, um das Einführen des Metallbands (5) in die Öffnung (2) zu ermöglichen.

2. Vorrichtung zur Befestigung (10) nach dem vorhergehenden Anspruch, **dadurch gekennzeichnet, dass** das Metallband (5) über den Teil der Vorrichtung (1) in Richtung Z übersteht.

3. Vorrichtung zur Befestigung (10) nach einem der vorhergehenden Ansprüche, **dadurch gekennzeichnet, dass** die Öffnung des Teils der Vorrichtung (1) von länglicher Form ist, die zwei entgegengesetzte ebene Flächen und zwei entgegengesetzte gewölbte Flächen in der Innenwand (3) definiert.

4. Vorrichtung zur Befestigung (10) nach einem der vorhergehenden Ansprüche, **dadurch gekennzeichnet, dass** h2 > h1.

5. Vorrichtung zur Befestigung (10) nach einem der vorhergehenden Ansprüche, **dadurch gekennzeichnet, dass** der Teil der Vorrichtung (1) aus einem Material ausgeführt ist, das aus der Gruppe gewählt ist, die einen Kunststoff, einen Verbundstoff und Mischungen davon umfasst.

6. Vorrichtung zur Befestigung (10) nach einem der vorhergehenden Ansprüche, **dadurch gekennzeichnet, dass** das Metallband (5) aus Stahl ausgeführt ist.

7. Bausatz, der die Vorrichtung zur Befestigung wie in einem der vorhergehenden Ansprüche definiert und ein Befestigungselement umfasst.

8. Verfahren zum Befestigen einer Vorrichtung an einem Träger (11), das die folgenden Schritte umfasst:
Bereitstellen einer Vorrichtung zur Befestigung (10) mit einem Teil (1), das eine Öffnung (2) umfasst, die eine Innenwand (3) mit einer Höhe h1 entlang einer Achse (Z) in dem Teil bildet, wobei die Innenwand (3) der Öffnung (2) zwei entgegengesetzte Flächen definiert und zwei Vorsprünge (4a, 4b) umfasst, die an den beiden entgegengesetzten Flächen angeordnet sind und an unterschiedlichen Positionen z₁, z₂, mit z₁ ungleich z₂, entlang der Achse (Z) angeordnet sind, wobei mindestens ein Vorsprung (4a, 4b) in Richtung der Achse (Z) und/oder in einer zur Achse (Z) senkrecht verlaufenden Ebene (XY) beweglich ist;
Bereitstellen eines Metallbands (5) mit einer Höhe h2 entlang der Achse (Z) und mit einer Dicke e, umfassend: einen ersten Satz aus zwei Aussparungen (7a, 7b), der dazu bestimmt ist, mit den Vorsprüngen (4a, 4b) der Innenwand (3) der Öffnung (2) zusammenzuwirken, und einen zweiten Satz aus zwei Aussparungen, der zum ersten Satz in einer zur Achse (Z) senkrecht verlaufenden Ebene (XY) symmetrisch ist, wobei das Metallband (5) somit vier Aussparungen (7a, 7B) umfasst;
Befestigen des Bands (5) in der Öffnung (2) des Teils der Vorrichtung (1), indem man die Aussparungen (7a, 7b) des Bands (5) mit den Vorsprüngen (4a, 4b) der Innenwand (3) der Öffnung (2) zusammenwirken lässt, wobei der bewegliche Vorsprung (4a) durch Ausüben einer äußeren Kraft auf den Vorsprung (4a) oder auf einen mit dem Vorsprung (4a) verbundenen Aktuator in Richtung der Achse (Z) und/oder in der zur Achse (Z) senkrecht verlaufenden Ebene (XY) verlagert wird;
Anordnen der im vorhergehenden Schritt erhaltenen Vorrichtung an einem Träger;
Einsetzen eines Befestigungselements (8, 9, 12) in die Öffnung (2) des Teils der Vorrichtung (1) und
Befestigen der Vorrichtung an dem Träger (11).

9. Verwendung der Vorrichtung wie in einem der Ansprüche 1 bis 6 definiert oder des Bausatzes wie in Anspruch 7 definiert, um die Vorrichtung an einem Träger zu befestigen.

## Claims

1. Device intended to be stationary (10) including:
- a part (1) comprising a through orifice (2) forming an internal wall (3) in said part, said internal wall (3) having a height h1 according to an axis (Z);
and
- a metal band (5), having a height h2 according to the axis (Z) and a thickness e, said metal band (5) being attached and fixed to the internal wall (3) of the orifice (2);
**characterized in that**:
• the orifice (2) defines two opposite surfaces in the internal wall (3),
• the internal wall (3) of the orifice (2) comprises two protuberances (4a, 4b) disposed on the two opposite surfaces and disposed in different positions z₁, z₂, with z₁ different from z₂, according to the axis (Z),
• the metal band (5) comprises: a first set of two cutouts (7a, 7b) cooperating with the protuberances (4a, 4b) of said internal wall (3); and a second set of two cutouts that are symmetrical with respect to the first set in a plane (XY) orthogonal to the axis (Z), the metal band (5) thus comprising four cutouts (7a, 7B),
• at least one protuberance (4a) is movable in the direction of the axis (Z) and/or in a plane (XY) orthogonal to the axis (Z) in order to allow the introduction of the metal band (5) into the orifice (2).

2. Device intended to be stationary (10) according to the preceding claim, **characterized in that** the metal band (5) extends beyond the part of the device (1) in the direction Z.

3. Device intended to be stationary (10) according to one of the preceding claims, **characterized in that** the orifice of the part of the device (1) is of oblong form defining two opposing flat surfaces and two opposing curved surfaces in the internal wall (3).

4. Device intended to be stationary (10) according to one of the preceding claims, **characterized in that** h2 > h1.

5. Device intended to be stationary (10) according to one of the preceding claims, **characterized in that** the part of the device (1) is made from a material chosen from group consisting of a plastic, a composite or mixes thereof.

6. Device intended to be stationary (10) according to one of the preceding claims, **characterized in that** the metal band (5) is made of steel.

7. Kit comprising the device intended to be fixed as defined in one of the preceding claims and a fixing element.

8. Method for fixing a device onto a support (11) comprising the steps of:
supplying a device intended to be stationary (10) comprising a part (1) comprising an orifice (2) forming an internal wall (3) of a height h1 according to an axis (Z) in said part; the internal wall (3) of the orifice (2) defining two opposing surfaces and comprising two protuberances (4a, 4b) disposed on the two opposite surfaces and disposed in different positions z₁, z₂ with z₁ different from z₂, according to the axis (Z), at least one protuberance (4a, 4b) being movable in the direction of the axis (Z) and/or in a plane (XY) orthogonal to the axis (Z);
supplying a metal band (5) of a height h2 according to the axis (Z) and of a thickness e comprising: a first set of two cutouts (7a, 7b) intended to cooperate with the protuberances (4a, 4b) of the internal wall (3) of the orifice (2); and a second set of two cutouts that are symmetrical with respect to the first set in a plane (XY) orthogonal to the axis (Z), the metal band (5) thus comprising four cutouts (7a, 7B);
fixing the band (5) in the orifice (2) of the part of the device (1) by making the cutouts (7a, 7b) of the band (5) cooperate with the protuberances (4a, 4b) of the internal wall (3) of the orifice (2), the movable protuberance (4a) being displaced by applying an external force on said protuberance (4a) or on an actuator linked to said protuberance (4a) in the direction of the axis (Z) and/or in the plane (XY) orthogonal to the axis (Z); disposing the device obtained in the preceding step on a support;
inserting a fixing element (8, 9, 12) into the orifice (2) of the part of the device (1); and fixing said device to the support (11).

9. Use of the device as defined in one of Claims 1 to 6 or of the kit as defined in Claim 7 in order to fix said device to a support.
